# EUROPÄISCHE PATENTSCHRIFT

(11) **EP 0 003 058 B1**
(45) Veröffentlichungstag und Bekanntmachung des Hinweises auf die Patenterteilung: **16.02.1983**
(21) Anmeldenummer: 78101873.4
(22) Anmeldetag: 29.12.1978
(51) Int. Cl.: C08L 23/12, C08K 5/53

(54) **Stabilisiertes Polypropylen**
Stabilized polypropylene
Polypropylène stabilisé

(30) Priorität: 09.01.1978 CH 181/78
(43) Veröffentlichungstag der Anmeldung: 25.07.1979
(73) Patentinhaber: CIBA-GEIGY AG, 4002 Basel (CH)
(72) Erfinder: Linhart, Helmut, CH-4153 Reinach (CH); Moser, Paul, Dr., CH-4125 Riehen (CH)

## Beschreibung

Die vorliegende Erfindung betrifft die Verwendung von Calciumsalzen von Phosphonsäuren bzw. deren Halbester zum Stabilisieren von Polypropylen, sowie das mittels dieser Calciumsalze gegen den schädlichen Einfluss von Licht und Wärme stabilisierte Polypropylen.

Aus dem US Pat. Nr. 3,310,575 ist es bekannt, Metallsalze von Phosphonsäuren bzw. deren Halbester zum Stabilisieren von organischem Material einzusetzen. Die dort beschriebenen Verbindungen besitzen den technischen Nachteil, dass das zu schützende Substrat nach der Einarbeitung dieser Additive eine oft störende Eigenfarbe besitzt. Ferner ist im Beispiel 3 der DT-OS 2,517,226 gezeigt worden, dass die Calciumsalze von Phosphonsäuren bzw. deren Halbester den analogen nicht versalzten Verbindungen in ihrer Wirksamkeit als Stabilisatoren in Niederdruckpolyäthylen unterlegen sind.

Es wurde nun nicht nur gefunden, dass die erfindungsgemäss zu verwendenden Calciumsalze dem zu schützenden Polypropylen keine störende Eigenfarbe verleihen, sondern auch, dass in Polypropylen die Wirksamkeit der Calciumsalze besser ist, als diejenige der analogen, nicht versalzten Phosphonsäuren bzw. deren Halbester.

Die Erfindung betrifft daher Polypropylen-Zusammensetzungen enthaltend mindestens eine Verbindung der Formel I 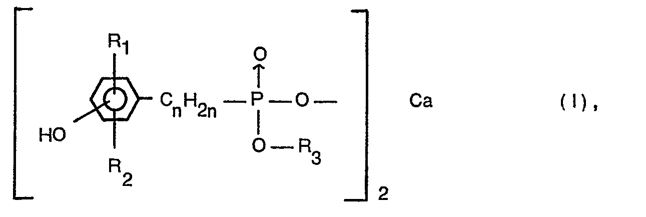 worin
n 1, 2, 3 oder 4 ist, und
R₁ C₁―C₆ Alkyl und
R₂ Wasserstoff oder C₁―C₆ Alkyl ist und
R₃ C₁―C₃₀ Alkyl bedeutet.
R₁ und R₂ sind als C₁―C₆ Alkyl beispielsweise Methyl, Aethyl, Isopropyl, t-Butyl, Neopentyl, t-Pentyl oder Isohexyl. Bevorzugt ist einer und besonders bevorzugt sind beide der Reste R₁ und R₂ in ortho-Stellung zur Hydroxylgruppen. Von besonderer Bedeutung sind Verbindungen, welche eine oder zwei t-Butylgruppen in ortho-Stellung zur Hydroxylgruppe besitzen.
R₃ kann als C₁―C₃₀ Alkyl beispielsweise Methyl, Aethyl, n-Propyl, Isopropyl, n-Butyl, sec.-Butyl, t-Butyl, n-Pentyl, Neopentyl, n-Hexyl, n-Octyl, t-Octyl, 2-Aethylhexyl, n-Decyl, n-Dodecyl, n-Tetradecyl, n-Hexadecyl, n-Octadecyl, n-Eicosyl, n-Docosyl oder Triacontyl bedeuten. Bevorzugt bedeutet R₃ C₁―C₁₈ Alkyl.
n kann 1, 2, 3 oder 4 bedeuten. Bevorzugt werden Verbindungen mit n = 1 oder 2, und ganz besonders solche mit _{n = 1}.

Hervorzuheben sind solche Verbindungen, welche der Formel la entsprechen 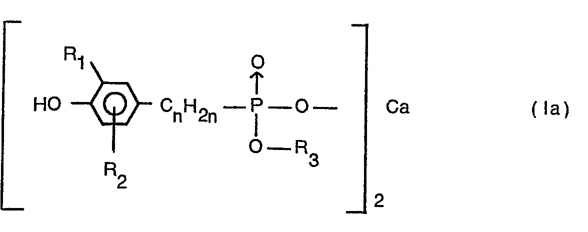 worin n, R₁, R₂ und R₃ die oben angegebene Bedeutung haben.

Bevorzugt sind Verbindungen der Formel 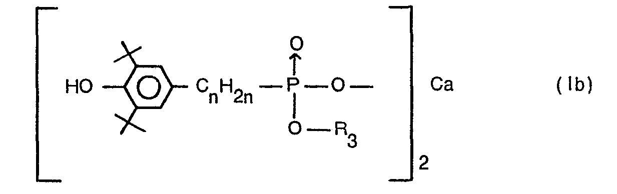 worin n und R₃ die oben angegebene Bedeutung haben.

Besonders bevorzugte Verbindungen entsprechen der Formel 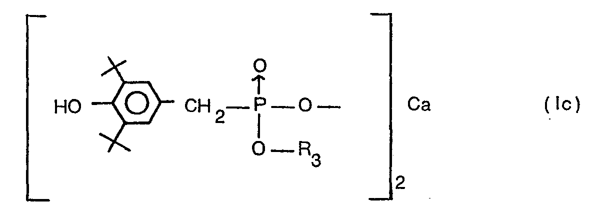 worin R₃ die oben angegebene Definition hat.

Als Beispiele von Verbindungen der allgemeinen Formel I seien genannt:
Calcium-bis-[O-äthyl-(3,5-di-t.butyl-4-hydroxybenzyl)-phosphonatJ
Calcium-bis-[0-n-butyl-(3,-di-t.butyl-4-hydroxybenzyl)-phosphonat]
Calcium-bis-[O-n-octyl-(3,5-di-t.butyl-4-hydroxybenzyl)-phosphonat]
Calcium-bis-[O-n-dodecyl-(3,5-di-t.butyl-4-hydroxybenzyl)-phosphonat
Calcium-bis-[O-n-octadecyl-(3,5-di-t.butyl-4-hydroxybenzyl)-phosphonat]
Calcium-bis-[O-äthyl-β-(3,5-di-t.butyl-4-hydroxyphenyl)-äthyl-phosphonat]
Calcium-bis-[O-äthyl-β-(3-methyl-5-t.butyl-4-hydroxyphenyl)-äthyl-phosphonat]
Calcium-bis-[0-äthyl-(3,5-di-isopropyl-4-hydroxybenzyl)-phosphonat.

Die Herstellung der Verbindungen der Formel 1 erfolgt nach bekannter Art und kann analog der n dem U.S. Pat. Nr. 3,310,575 beschriebenen Methoden erfolgen. So wird beispielsweise ein Phosphonsäure-Halbester der Formel II 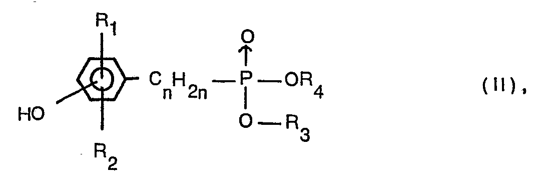 worin n, R₁, R₂ und R₃ die angegebene Bedeutung haben und R₄ Wasserstoff oder Natrium ist, in Wasser oder einem Wasser/Alkohol-Gemisch mit einem Calciumsalz umgesetzt. Wird vom Halbester der freien Phosphonsäure ausgegangen, eignet sich als Calciumsalz Calciumoxid, -hydroxyd oder - carbonat; wird vom entsprechenden Natriumsalz ausgegangen, so eignen sich alle Calciumsalze, welche in Wasser bzw. dessen Gemisch mit Alkoholen, wie Methanol, Aethanol, Isopropanol oder Butanol genügend löslich sind. Es kommen dabei z.B. Calciumchlorid, -bromid, -nitrat oder -acetat in Frage. Die Verbindungen der Formel II sind bekannt. Ihre Herstellung ist dem Fachmann geläufig und erfolgt beispielsweise wie in Houben-Weyl 12 (1), 410 beschrieben.

Die erfindungsgemäss zu verwendenden Verbindungen eignen sich zum Stabilisieren von Polypropylen. Dieses kann prinzipiell in beliebiger Form vorliegen, wie Formmassen, Kabelisolierungen etc. Bevorzugt und wegen ihrer guten antioxidativen und farblichen Eigenschaften besonders geeignet sind die Calciumphosphonate als Zusätze zu Polypropylen-Fasern, -Fäden oder -Filmen. Die Calciumphosphonate entfalten ihre gute Wirksamkeit aber auch in Polypropylen-Copolymeren erhalten durch Copolymerisation von Propylen mit z.B. a-Olefinen, wie Aethylen, 1-Buten, 1-Hexen oder 1 -Octen. Vorzugsweise beträgt dabei der Propylen-Anteil mehr als 70%.

Die Einarbeitung der Calciumphosphonate erfolgt mittels üblicher Methoden, beispielsweise durch Trockenmischen des Polymeren mit mindestens einem der erfindungsgemäss zu verwendenden Calciumphosphonate und anschliessender Verarbeitung im Kneter, Mischwalzwerk oder Extruder. Die genannten Additive können auch in der Form einer Lösung oder Dispersion auf das Polymere aufgebracht werden, wobei das Lösungsmittel nachträglich verdunstet wird.

Bevorzugt werden 0,01 bis 1 Gew.-%, besonders bevorzugt 0,05 bis 0,2 Gew.-% des Additivs, bezogen auf das zu schützende Substrat, eingearbeitet.

Die erfindungsgemäss zu verwendenden Calciumphosphonate können allein oder zusammen mit anderen üblichen Zusatzstoffen verwendet werden. Werden Additiv-Gemische eingesetzt, so können synergistische Effekte auftreten. Dabei kommen beispielsweise folgende weitere Additive in Frage:
1. Phenolische Antioxidantien, wie
   a) einfache 2,6-Dalkylphenole, z.B. 2,6-Di-t.butyl-4-methylphenol,
   b) Bisphenole, z.B. 1,1,3 Tris-(5-t.butyl-4-hydroxy-2-methylphenyl)-butan oder 4,4' - Thiobis - (6-t.butyl-3-methylphenol),
   c) Hydroxybenzylaromaten, z.B. 1,3,5-Tris-(3,5-di-t.butyl-4-hydroxybenzyl)-isocyanurat oder 1,3,5-Tri-(3,5-di-t.butyl-4-hydrobenzyl)-2,4,6-methylbenzol,
   d) Ester der β-(3,5-Di-t.butyl-4-hydroxyphenylpropionsäure mit ein- oder mehrwertigen Alkoholen, wie z.B. mit Octadecanol, Thiodiäthylenglykol oder Pentaerithrit.
2. UV-Absorber und Lichtschutzmittel, wie
   2-(2'-Hydroxyphenyl)-benztriazole, 2,4'-Bis-(2'-hydroxyphenyl)-6-alkyl-s-triazine, 2-Hydroxybenzophenone, 1,3-Bis-2-(2'-hydroxybenzoyl)-benzole. Ester von gegebenenfalls substituierten Benzoesäuren, Acrylate, Nickelverbindungen, sterisch gehinderte Amine oder Oxalsäurediamide.
3. Metalldesaktivatoren, wie
   N,N'-Bis-salicyloylhydrazin.
4. Phosphite, wie
   Tri-(nonylphenyl)-phosphit oder Tris-(2,4-di-t.butylphenyl)-phosphit.
5. Peroxidzerstörende Verbindungen, wie
   die Ester der β-Thio-dipropionsäure.
6. Sonstige Zusätze, wie
   Gleitmittel, Emulgatoren, Pigmente, optische Aufheller, Flammschutzmittel oder Antistatica.

Beispiele für weitere Additive, mit denen zusammen die erfindungsgemäss verwendbaren Stabilisatoren eingesetzt werden können, finden sich in der DT-OS 2 427 853 auf den Seiten 18-24.

Die Erfindung wird in den folgenden Beispielen näher beschrieben. Prozente (%) bedeuten darin Gewichtsprozente, berechnet auf das zu stabilisierende Material.

### Beispiel 1

### Herstellung von Calcium-bis[-0-äthyl-(3,5-di-tert.butyl-4-hydroxybenzyl)-phosphonat]

328 g (1 Mol) 0-Aethyl-4-hydroxy-3,5-di-tert.butyl-benzylphosphonsäure werden in 2,5 Wasser suspendiert und mit 100 ml 10-N-Natroniauge neutralisiert (pH 6,5). Es entsteht eine klare Lösung, in die bei Raumtemperatur innerhalb von 45 Minuten eine Lösung von 123 g (0,525 Mol) Calciumnitrat-Tetrahydrat in 130 ml Wasser zugetropft werden. Der kristallin ausfallende Niederschlag wird abgenutscht, mit 500 ml Wasser gewaschen und anschliessend 14 Stunden bei 70°C und einem Druck von 11 mm Hg getrocknet. Auf diese Weise erhält man das Calcium-bis-[0-äthyl-(3,5-di-tert.-butyl-4-hydroxybenzyl)-phosphonat] als farblose Kristalle.

Elementar-Analyse:

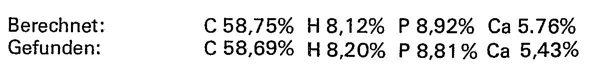

Zu derselben Verbindung gelangt man auch, indem man 328 g (1 Mol) 0-Aethyl-4-hydroxy-3,5-di-tert.butyl-benzylphosphonsäure und 28 g (0,5 Mol) Calciumoxyd in 6 I 50%igem wässrigen Aethanol suspendiert und das Gemisch so lange unter Rückfluss erhitzt, bis sich eine klare Lösung gebildet hat. Zur Isolierung des entstandenen Calcium-Salzes der genannten Säure wird die Lösung auf ca. 1/6 ihres Volumens eingedampft. Dabei scheidet sich dieses Salz allmählich als kristalliner Niederschlag aus, der in der oben beschriebenen Weise getrocknet wird.

### Beispiel 2

1000 Teile unstabilisiertes Polypropylenpulver (Schmelzindex ~ 20) werden in einem Schnellmischer mit 1 Teil Calciumstearat und 2,5 Teilen eines Mattierungsmittels (TiO₂-Rutil) sowie jeweils mit den in der nachstehenden Tabelle aufgeführten Additiven vermischt und anschliessend bei max. 220° extrudiert und granuliert. Das erhaltene Granulat wird auf einer Labor-Extruderspinnanlage bei max. 280°C zu Multifilamenten versponnen und diese auf einer Streckzwirnmaschine zu einem Endtiter von 130/37 Denier und einer Restdehnung von 30% verstreckt. Diese Multifilamente werden jeweils in 4 Lagen parallel auf einen Karton zu sogenannten Garnspiegeln aufgewickelt und daran die Yellowness-Indexwerte (YI) nach ASTM 1925-70 gemessen. (Kleinere Zahlen bedeuten bessere Farben).

Die Ergebnisse sind in der Tabelle I zusammengestellt:

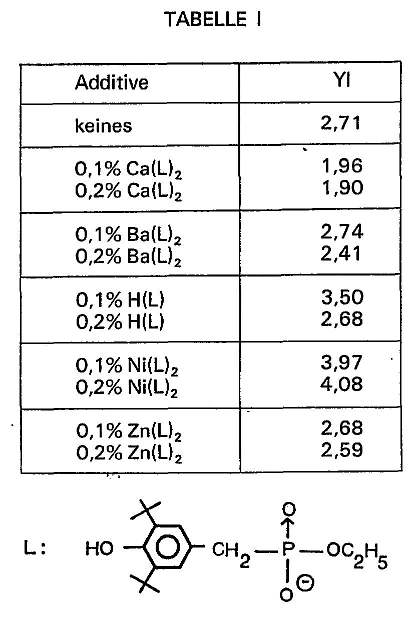

### Beispiel 3

1000 Teile unstabilisiertes Polypropylenpulver (Schmelzindex ~ 20) werden in einem Schnellmischer mit 1 Teil Calciumstearat, 2,5 Teilen eines Mattierungsmittels (TiO₂-Rutin) und 6 Teilen Dilaurylthiodipropionat sowie jeweils mit den in der Tabelle aufgeführten Additiven vermischt und anschliessend bei max. 220°C extrudiert und granuliert. Die Herstellung der Multifilamente und die Messung der Yellowness-Indexwerte (YI) erfolgt wie in Beispiel 2 beschrieben.

Der Ergebnisse sind in der Tabelle II zusammengestellt:

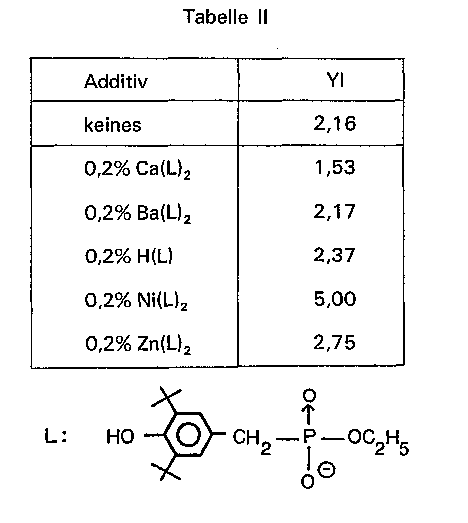

## Patentansprüche

1. Polypropylen-Zusammensetzungen enthaltend mindestens eine Verbindung der Formel I 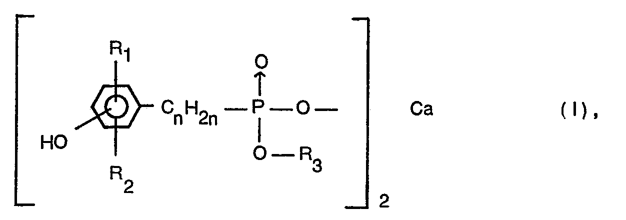 worin
n 1, 2, 3 oder 4 ist, und
R₁ C₁―C₆ Alkyl und
R₂ Wasserstoff oder C₁―C₆ Alkyl ist, und
R₃ C₁―C₃₀ Alkyl bedeutet.

2. Polypropylen-Zusammensetzungen gemäss Anspruch 1, enthaltend mindestens eine Verbindung der Formel 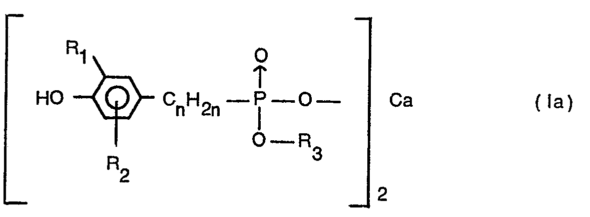 worin n, R₁, R₂ und R₃ die oben angegebene Bedeutung haben.

3. Polypropylen-Zusammensetzungen gemäss Anspruch 1, enthaltend mindestens eine Verbindung der Formel 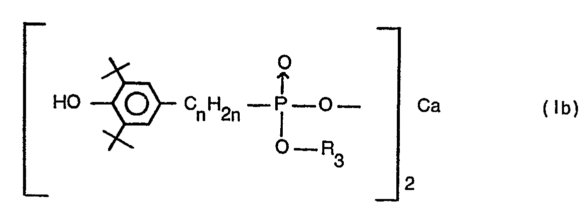 worin n und R₃ die oben angegebene Bedeutung haben.

4. Polypropylen-Zusammensetzung gemäss Anspruch 1, enthaltend mindestens eine Verbindung der Formel 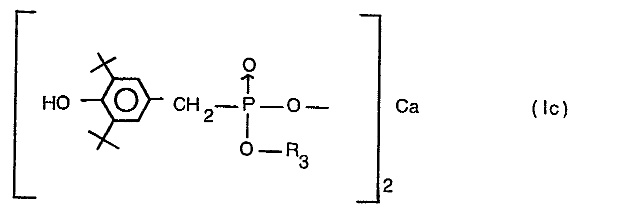 worin R₃ die oben angegebene Bedeutung hat.

5. Polypropylen-Zusammensetzung gemäss Anspruch 1, dadurch gekennzeichnet, dass in der Formel I n = 1 oder 2 ist.

6. Polypropylen-Zusammensetzungen gemäss Anspruch 1, dadurch gekennzeichnet, dass es sich dabei um Co-Polymere des Propylens mit Aethylen, 1-Buten, 1-Hexen oder 1-Octen handelt.

7. Polypropylen-Zusammensetzungen gemäss Anspruch 1, dadurch gekennzeichnet, dass es sich dabei um Polypropylen-Fäden, -Fasern oder -Filme handelt.

8. Polypropylen-Zusammensetzung gemäss Anspruch 1, dadurch gekennzeichnet, dass die Verbindung der Formel I Calcium-bis-[0-äthyl-(3,5-di-t.butyl-4-hydroxybenzyl)phosphonat] ist.

## Revendications

1. Compositions à base de polypropylène qui contiennent au moins un composé répondant à la formule I 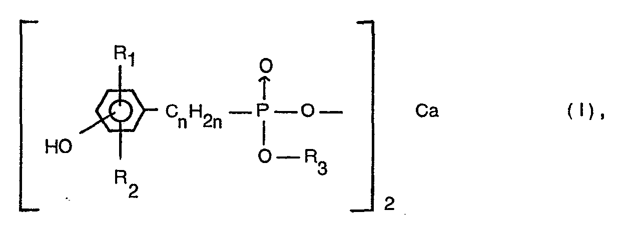 dans laquelle
n est égal à 1, à 2, à 3 ou à 4;
R₁ représente un radical alkyle contenant de 1 à 6 atomes de carbone,
R₂ représente l'hydrogène ou un radical alkyle contenant de 1 à 6 atomes de carbone et
R₃ représente un radical alkyle contenant de 1 à 30 atomes de carbone.

2. Compositions à base de polypropylène selon la revendication 1, qui contiennent au moins un composé répondant à la formule 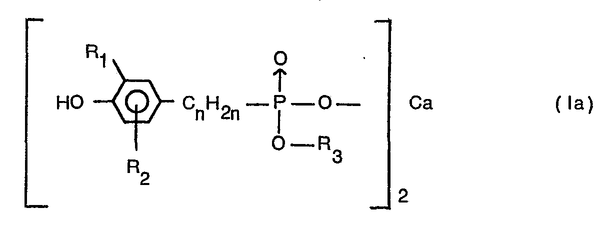 dans laquelle n, R₁, R₂ et R₃ ont les significations indiquées ci-dessus.

3. Compositions à base de polypropylène selon la revendication 1 qui contiennent au moins un composé répondant à la formule 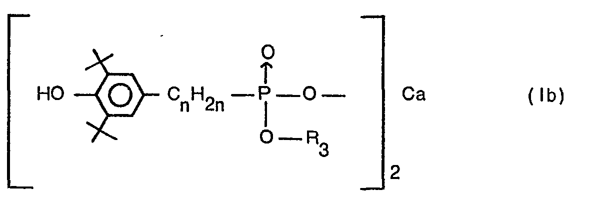 dans laquelle n et R₃ ont les significations précédemment données.

4. Composition à base de polypropylène selon la revendication 1 qui contient au moins un composé répondant à la formule: 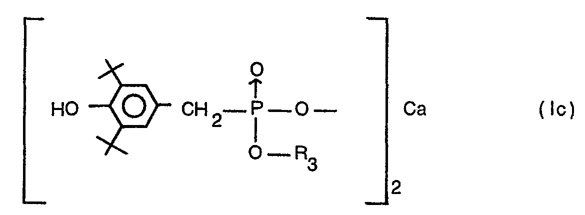 dans laquelle R₃ a la signification précédemment donnée.

5. Composition à base de polypropylène selon la revendication 1, caractérisée en ce que, dans la formule I, n est égal à 1 ou à 2.

6. Compositions à base de polypropylène selon la revendication 1, caractérisées en ce qu'il s'agit de copolymères du propylène avec l'éthylène, le butène-1, l'hexène-1 ou l'octène-1.

7. Compositions à base de polypropylène selon la revendication 1, caractérisées en ce qu'il s'agit de fils, de fibres ou de feuils de polypropylène.

8. Composition à base de polypropylène selon la revendication 1, caractérisée en ce que le composé de formule I est le bis-[0-éthyl-(di-tert-butyl-3,5-hydroxy-4-benzyl)-phosphonate] de calcium.

## Claims

1. A polypropylene composition containing at least one compound of the formula I 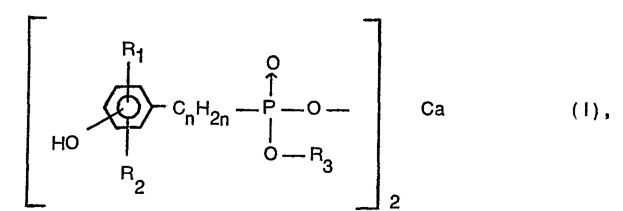 wherein
n is 1, 2, 3 or 4,
R₁ is C₁―C₆-alkyl,
R₂ is hydrogen or C₁―C₆-alkyl, and
R₃ is C₁―C₃₀-alkyl.

2. A polypropylene composition according to Claim 1 containing at least one compound of the formula 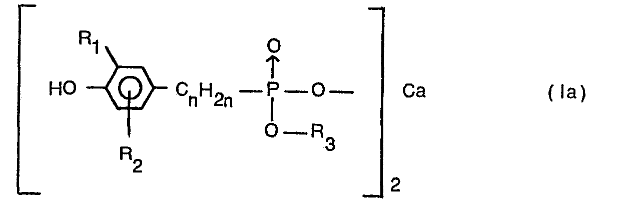 wherein n, R₁, R₂ and R₃ have the meanings defined above.

3. A polypropylene composition according to Claim 1 containing at least one compound of the formula 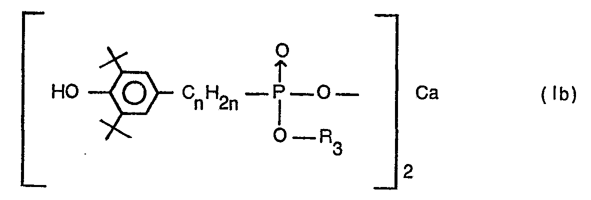 wherein n and R₃ have the meanings defined above.

4. A polypropylene composition according to Claim 1 containing at least one compound of the formula 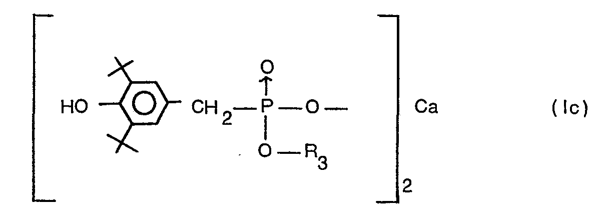 wherein R₃ has the meaning defined above.

5. A polypropylene composition according to Claim 1, wherein n is 1 or 2 in the formula I.

6. A polypropylene composition according to Claim 1, wherein a copolymer of propylene with ethylene, 1-butene, 1-hexene or 1-octene is used.

7. A polypropylene composition according to Claim 1, which is in the form of polypropylene filaments, fibres or films.

8. A polypropylene composition according to Claim 1, wherein the compound of the formula I is calcium-bis-[0-ethyl-(3,5-di-t-butyl-4-hydroxybenzyl)-phosphonate].
